**Europäisches Patentamt**

**European Patent Office**

**Office européen des brevets**

(19)

(11) Publication number : **0 279 849 B1**

(12) # EUROPEAN PATENT SPECIFICATION

(45) Date of publication of patent specification :
**24.06.92 Bulletin 92/26**

(51) Int. Cl.⁵ : **C02F 1/32**

(21) Application number : **87906078.8**

(22) Date of filing : **01.09.87**

(86) International application number :
**PCT/DK87/00106**

(87) International publication number :
**WO 88/01606 10.03.88 Gazette 88/06**

---

(54) **A PROCESS FOR CLEANING CHLORINATED WATER AND AN APPARATUS FOR CARRYING OUT THE PROCESS.**

---

The file contains technical information submitted after the application was filed and not included in this specification

(30) Priority : **03.09.86 DK 4217/86**

(43) Date of publication of application :
**31.08.88 Bulletin 88/35**

(45) Publication of the grant of the patent :
**24.06.92 Bulletin 92/26**

(84) Designated Contracting States :
**AT BE CH DE FR GB IT LI LU NL SE**

(56) References cited :
**CH-A- 458 222**
**DE-A- 3 020 170**
**FR-A- 2 453 829**
**US-A- 3 659 096**

(73) Proprietor : **KAAS, Povl**
**26, Bogens Kvarter, Gullestrup**
**DK-7400 Herning (DK)**

(72) Inventor : **KAAS, Povl**
**26, Bogens Kvarter, Gullestrup**
**DK-7400 Herning (DK)**

(74) Representative : **von Kreisler, Alek,**
**Dipl.-Chem. et al**
**Deichmannhaus am Hauptbahnhof**
**W-5000 Köln 1 (DE)**

EP 0 279 849 B1

Jouve, 18, rue Saint-Denis, 75001 PARIS

## Description

Technical Field

The invention relates to a process for cleaning chlorinated water, preferably in a swimming pool, by circulating the water through a vessel while said water is irradiated by a plurality of UV radiation lamps emitting light at a wave length exceeding 300 nm. The invention relates furthermore to an apparatus for carrying out the process.

Background Art

Danish Patent Specification No. 144,663 corresponding to DE-A-30 20 170 discloses a process and an apparatus for cleaning chlorinated water, whereby the water initially passes a plurality of heating units and is subsequently irradiated by a number of UV radiation lamps inter alia emitting light at a wave length exceeding 300 nm.

During late years increasing requirements have been presented to the treatment of water so as to reduce the amount of bacteria, the inorganic pollution, and the occurrence of chloroamines and trihalogen methanes.

Description of the Invention

It turned out that these requirements can be met by a process for cleaning chlorinated water, preferably in a swimming pool, by circulating the water through a vessel (1, 2) while said water is irradiated by a plurality of UV radiation lamps (9) emitting light at a wave length exceeding 300 nm, whereby the water is irradiated by IFR radiation lamps (8) before it passes the UV radiation lamps (9) said IFR radiation lamps (8) emitting light at a wave length in the range of 765 nm to 10μm, and the water furthermore is irradiated by UV radiation lamps (11) emitting light at a wave length of 253.7 nm, characterized in that the water furthermore is irradiated by UV radiation lamps (10) emitting light at a wave length in the range of 100 to 200 nm.

As a result a process is provided which ensures a strong and fast extinction of bacteria, a disintegration of lumps of bacteria, a fast and strong disintegration of chloroamines while liberating nitrogen, a fast and strong removal of trihalogen methanes, a reduction of the content of organic material in the water, as well as an efficient utilization of the electric energy for the radiation lamps.

The strong and fast extinction of the bacteria is partly a consequence of the disintegration of the lumps of bacteria. Such lumps of bacteria result primarily from residues from the flocculation occurring in connection with a mechanical filtration, from secretions and saliva of the bathing persons, from residues of coatings of biological material getting loose in the pipe system or the filter, as well as from growth of bacteria in the filter system.

The reduction of the water content of organic material appears as lower values for COD (chemical oxygen consumption) and TOC (total organic carbon).

The use of the IFR radiation lamps of wave lengths in the range of 765 nm to 10 μm turned out to provide a far-reaching radiation effect in the water and at the same time the electric energy used is well converted into heat in the water. Tests have for instance shown that 96% of the electric energy are converted into heat.

The water is according to the invention particularly advantageously passed alternately several times past the IFR radiation lamps and the UV radiation lamps emitting light at a wave length exceeding 300 nm.

The process according to the invention may furthermore be characterised by continuously irradiating the water by UV radiation lamps emitting light at a wave length in the range of 100-200 nm. In this manner certainty is obtained that the ability of the preceding lamps to disintegrate lumps of bacteria is completely utilised before the bacteria are subjected to the particularly bactericidal wave length of 253.7 nm.

The invention deals furthermore with an apparatus for cleaning chlorinated water and comprising a first vessel, in which the water passes from an inlet to an outlet, both the inlet and the outlet being connected to the pool, and whereby the vessel is provided with at least one UV radiation lamp emitting light at a wave length exceeding 300 nm. The vessel of the apparatus according to the invention further comprises at least one IFR radiation lamp emitting light at a wave length in the range of 765 nm to 10 μm, the IFR radiation lamp being situated in front of the UV radiation lamp in the flow direction, that the vessel further comprises at least one UV radiation lamp emitting light at a wave length in the range of 100-200 nm, and that UV radiation lamps emitting light at a wave length of 253.7 nm are provided in connection with the vessel and preferably in a separate second vessel situated after the first vessel in the flow direction..

As a result a particularly advantageously operating apparatus for carrying out the process is obtained. It turned out that the apparatus inter alia ensured the effects in question and at the same time the necessary consumption of chlorine was reduced.

Brief Description of the Drawings

The invention will be described below with reference to the accompanying drawing, in which

Fig. 1 is a side view of a preferred embodiment of an apparatus according to the invention,

Fig. 2 is a top view of the embodiment of Fig. 1,

Fig. 3 is a graphic view showing the effect versus the time of the apparatus on colibacteria when various radiation lamps are coupled, and

Fig. 4 is a graphic view showing in two different operation states the measurements of the amount of bond chlorine at the inlet and outlet, respectively, of the apparatus.

Description of the Preferred Embodiments of the Invention

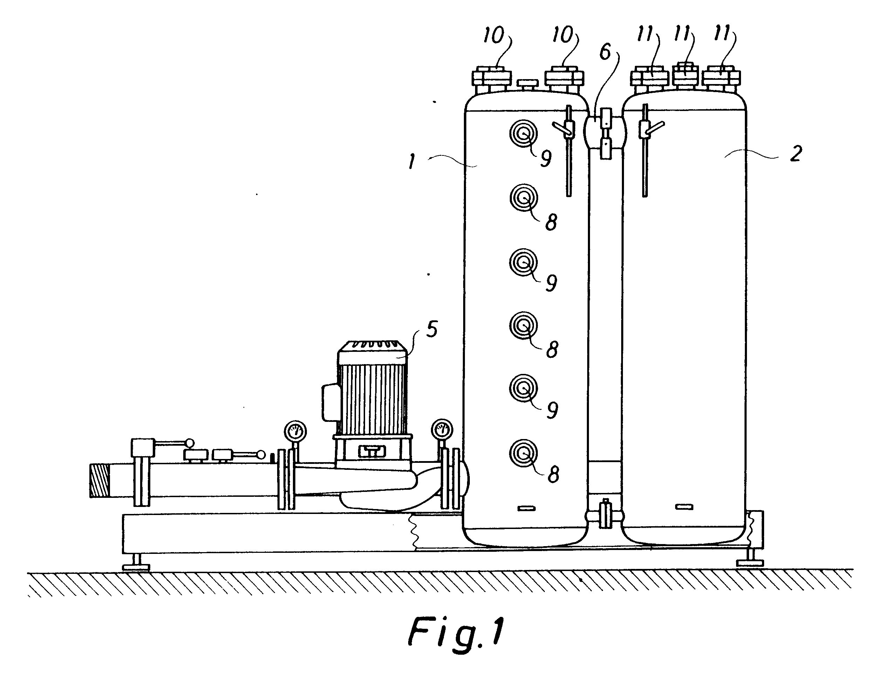

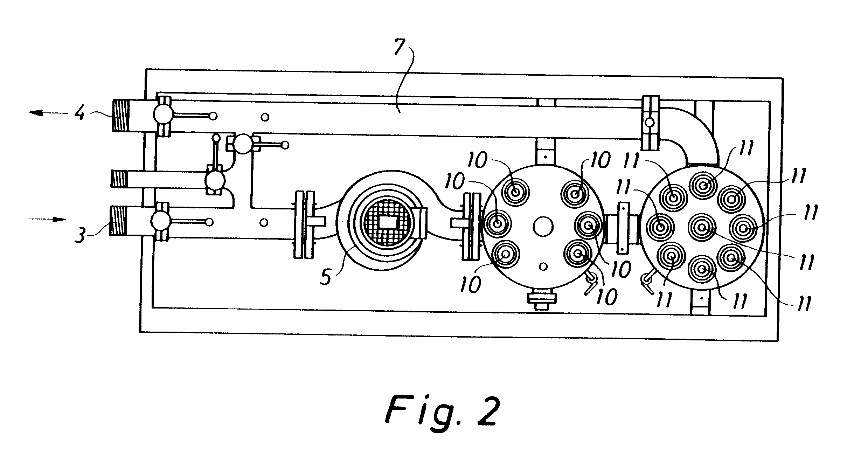

The apparatus according to the invention shown in Figs. 1 and 2 comprises a first vessel 1 and a second vessel 2 situated successively in a pipe system in the flow direction of the water. This pipe system extends from an inlet 3 to an outlet 4 via a pump 5 and the two vessels 1 and 2. As illustrated the water flows into the bottom of the first vessel 1 and then upwards into the top of said first vessel. Subsequently, the water flows into the top of the second vessel 2 through a connecting piece 6 and then downwards and out at the bottom to the outlet 4 through a pipe 7.

The first vessel 1 is provided with a number of IFR radiation lamps (infrared radiation lamps) 8 situated above one another so as to extend radially in a manner not described more detailed into the vessel transverse to the flow direction of the water. These IFR radiation lamps emit light at a wave length in the range of 765 nm to 10 $\mu$m. UV radiation lamps 9 are correspondingly provided, said lamps projecting radially inwards and emitting light at a wave length exceeding 300 nm. Thus the UV radiation lamps extend transverse to the flow direction of the water too.

The first vessel 1 is furthermore provided with a plurality of UV radiation lamps 10 emitting light at a wave length in the range 100 to 200 nm. These UV radiation lamps 10 are mounted in the top of the first vessel 1 and extend axially downwards in a manner not described more detailed through the vessel 1 to the immediate vicinity of the bottom thereof. As illustrated in Fig. 2 the UV radiation lamps 10 are substantially equally spaced from the central axis of the round cylindrical vessel 1.

In the top of the second vessel 2 a plurality of UV radiation lamps 11 are mounted, said lamps emitting light at a wave length of 253.7 nm. These UV radiation lamps 11 extend axially downwards through the second vessel 2 to the immediare vicinity of the bottom thereof and are circled about the axis thereof. Furthermore a single lamp extending coaxially with the axis of the vessel 2 is provided.

In the shown preferred embodiment of the invention the two vessels 1 and 2 are of a diameter of about 30 cm and a height of about 1 m. The latter implies that the radiation lamps 8 and 9 are of a length of about 30 cm, and the radiation lamps 10 and 11 are of a length of about 1 m. By this apparatus the water is initially pumped by means of the pump 5 through the vessel 1 and subsequently through the vessel 2 at the same time as it passes alternately the IFR radiation lamps emitting light at a wave length in the range 765 nm to 10 $\mu$m and the UV radiation lamps emitting light at a wave length exceeding 300 nm. At the same time the water is continuously irradiated by the UV radiation lamps emitting light at a wave length in the range 100 nm to 200 nm. Upon this irradiation the water flows through the connecting piece 6 into the second vessel 2, where it is subjected to a strong radiation by the UV radiation lamps emitting light at a wave length of 253.7 nm.

In order to illustrate the effects of the apparatus a number of tests employing various sets of lamps have been carried out. These tests revealed a water flow of the following values measured at the inlet of the apparatus:

pH = 7.2

Free chlorine = 0.6 mg/l

Bound chlorine = 0.2 mg/l

The flow velocity of the water = 24 m³/h

Flow period = 40 sec.

Below a number of tests A-E has been described in greater details, the two first A and B being comparison tests employing equipment with the same starting data as mentioned. above.

Test A

The water was filtrated through a "Millipore" filter of the type HA 0.45 $\mu$m.

The amount of germs at 21°C was determined by agar plate counting and incubation for 72 hours. The amount of germs at 37°C was determined on blood agar (5% calf blood) and incubation at 37°C for 24 hours.

Eosinmethylene blue agar (EMB) incubated at 37°C for 24 hours was used for the test for coliform bacteria. Suspect colonies on EMB were examined in McConkey bouillon, partly at 37°C and partly at 44°C for possible development of acid and air.

Cetrimid agar incubated at 42°C for 72 hours was used for the test for Ps aeroginosa.

At the inlet of this apparatus between 50 and 200 bacteria/100 ml were measured, and at the outlet of the apparatus between 5 and 10 bacteria/100 ml were measured.

Test B

For this test an apparatus like the one described in the above Danish Patent Specification No. 144,663 was used, but the UV radiation lamps emitting light at wave lengths exceeding 300 nm and of 253.7 nm being turned off. Thus only the heating units were turned on.

At the inlet of this apparatus between 50 and 200 bacteria/100 ml were measured, and at the outlet of the apparatus between 50 and 200 bacteria/100 ml were measured.

Test C

In an apparatus like the one shown in Figs. 1 and 2 only the IFR radiation lamps emitting light at wave lengths in the range 765 nm to 10 $\mu$m were turned on.

At the inlet of this apparatus between 100 and 200 bacteria/100 ml were measured, and at the outlet of the apparatus an overgrowth of bacteria corresponding to an uncountable number of bacteria/100 ml were measured.

Test D

In the same apparatus the following lamps were turned on:
1. IFR radiation lamps emitting light at a wave length in the range 765 nm to 10 $\mu$m.
2. An UV radiation lamp emitting light at a wave length of 253.7 nm.

At the inlet of this apparatus between 50 and 200 bacteria/100 ml were measured, and at the outlet of the apparatus between 300 and 500 bacteria/100 ml were measured.

The above perhaps surprising rise in number of bacteria is not due to an actual growth but on the contrary to a strong disintegration of lumps of bacteria by the IFR radiation lamps. If the content of chlorine was considerably increased the bacteria would be extinguished but a number of negative effects arises as a consequence of the rise of allergy-causing and noxious organic chlorine compounds.

Test E

In the apparatus the following lamps were turned on:
1. The IFR radiation lamps emitting light at a wave length in the range 765 nm to 10 $\mu$m.
2. UV radiation lamps emitting light at a wave length in the range 100 and 200 nm.
3. UV radiation lamps emitting light at a wave length exceeding 300 nm.
4. UV radiation lamps emitting light at a wave length of 253.7 nm.

At the inlet of this apparatus between 50 and 200 bacteria/100 ml were measured, and at the outlet of the apparatus almost 0 bacteria/100 ml were measured.

By the apparatus according to the invention less chlorine was added but the same electric energy was used, and a total extinction of germs was obtained unlike other tests. An essential feature is that by using IFR radiation lamps emitting light at a wave length in the range 765 nm to 10 $\mu$m instead of heating units like the apparatus of the above Danish Patent Specification, a very far-reaching radiation effect was obtained in the water at the same time as the electric energy used was converted into heat in the water. By a controlled test of 1 $m^3$ water an energy absorption of 96% was measured.

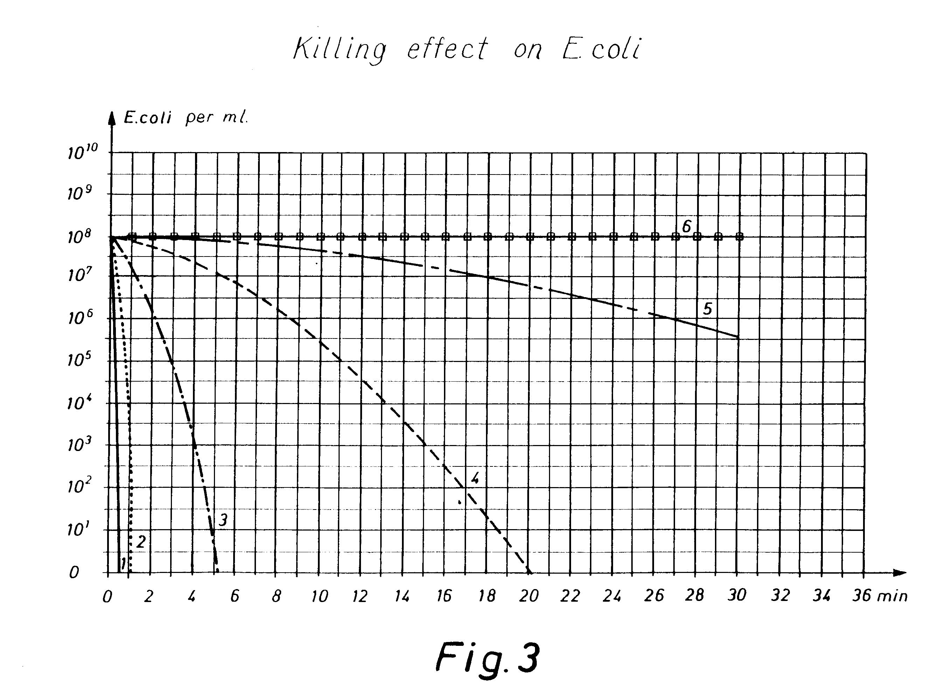

Fig. 3 is a graphic view resulting from tests on the apparatus and showing the effect of the apparatus on water containing a predetermined amount of colibacteria through addition of such bacteria. Thus the various curves show the amount of colibacteria/ml water as function of the time upon starting of the apparatus. Each curve shows the apparatus in the following operation phases, the water at the inlet containing 0.06 mg of free chlorine/l (HOCl+OCl⁻ at pH 7.2):
1. All the lamps of the apparatus were turned on.

2. The UV radiation lamps 10 emitting light at a wave length in the range of 100 nm to 200 nm were turned off while all the other lamps were turned on.

3. Only the UV radiation lamp 11 was turned on.

4. All the lamps were turned off and instead the addition of chlorine was increased to such an extent that the amount of free chlorine was 3 mg of free chlorine (HOCl+OCl⁻ at pH 7.2)/l.

5. Only the UV radiation lamp emitting light at a wave length in the range of 100 nm to 200 nm was turned on, and.

6. only the IFR radiation lamp 8 emitting light at a wave length in the range of 765 nm to 10 µm was turned on.

A conventional chlorination of usual bathing water implies that after a reaction period of 10 min. the so-called "break-point" is reached at an administration of 12 parts by weight of chlorine to 1 part by weight of ammonia (considered to be nitrogen). When the same type of bathing water furthermore is irradiated in accordance with the process of the invention, the "break-point" is reached already after 40 sec. at an administration of only 6 parts by weight to 1 part by weight of ammonia (considered to be nitrogen). The necessary period of 40 sec. corresponds to a passage through the apparatus. This result is only obtained provided all the lamps are turned on, whereas a turning off of merely one or more types of lamps implies that the apparatus has no effect at all.

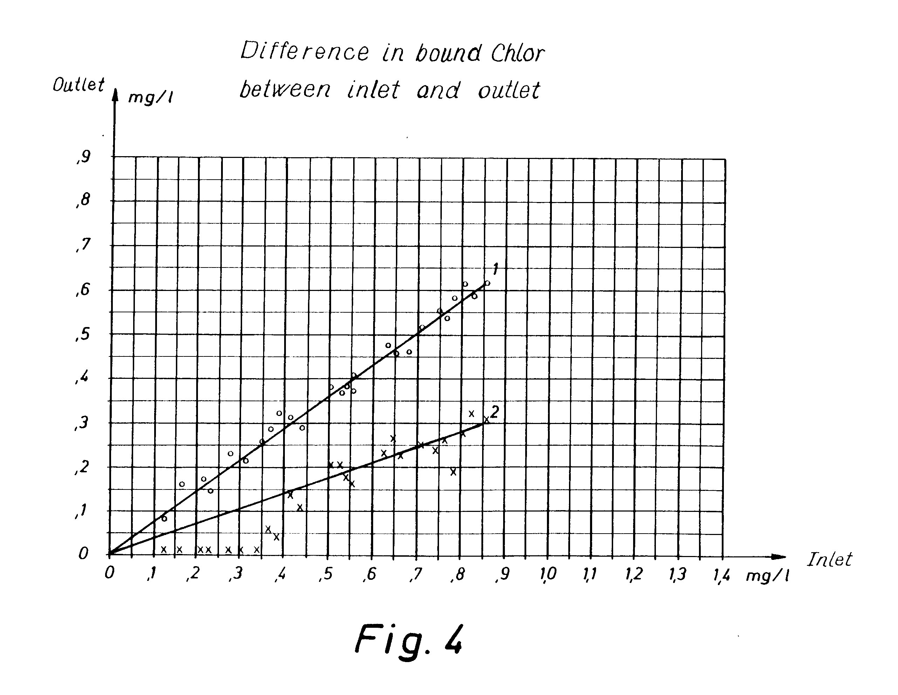

Fig. 4 is a graphic view showing measurements of the amount of bound chlorine at the inlet (the X-axis) of the apparatus and the outlet (the Y-axis) of the apparatus at various starting amounts. The two sets of measurements illustrate two operation phases of the apparatus:

1. Only the UV radiation lamps 9 and 10 emitting light at wave lengths exceeding 300 nm and of 253.7 nm, respectively, were turned on.

2. All the radiation lamps of the apparatus were turned On.

These tests show that the apparatus ensures a considerable reduction of the amount of bound chlorine and consequently a strong decomposition of for instance chloroamines into nitrogen and hydrochloric acid.

By the use of the process and the apparatus according to the invention in connection with swimming pools a considerable reduction of the content of trihalogen methanes, a lower amount of potassium permanganate, and a lower TOC value have been demonstrated. As far as for instance trihalogen methanes are concerned tests with all the lamps turned on have shown a considerable reduction, whereas only a variation in production of trihalogen methanes appears when other combinations of lamps turned on are used. The good effect is presumably due to a correlation between the extensive removal of organic material and disintegration of for instance chloroform. A test measuring on the apparatus revealed the following values:

| Trihalogen methane | inlet | 187 | µg/l |
|---|---|---|---|
| | outlet | 0 | µg/l |
| KMnO₄ | inlet | 8.38 | mg/l |
| | outlet | 1.93 | mg/l |
| TOC | inlet | 4.28 | mg/l |
| | outlet | 1.05 | mg/l |
| FTU* | inlet | 0.25 | |
| | outlet | 0.25 | |

*FTU (formazine turbidity units) is a turbidity measuring measured by the amount of formazine added to completely pure crystal-clear water until water of the same turbidity like the bathing water is obtained.

The invention has been described with reference to a preferred embodiment. Many modifications may, however, be carried out without thereby deviating from the scope of protection. According to a preferred embodiment the IFR radiation lamps are used as a 35 Ω resistance in the electric circuit including the UV radiation lamps emitting light at a wave length exceeding 300 nm. As a result an economically advantageous control of the UV radiation lamps in question is ensured.

## Claims

1. A process for cleaning chlorinated water, preferably in a swimming pool, by circulating the water through a vessel (1, 2) while said water is irradiated by a plurality of UV radiation lamps (9) emitting light at a wave length exceeding 300 nm, whereby the water is irradiated by IFR radiation lamps (8) before it passes the UV radiation lamps (9) said IFR radiation lamps (8) emitting light at a wave length in the range of 765 nm to 10μm, and the water furthermore is irradiated by UV radiation lamps (11) emitting light at a wave length of 253.7 nm, characterized in that the water furthermore is irradiated by UV radiation lamps (10) emitting light at a wave length in the range of 100 to 20 nm.

2. A process as claimed in claim 1, **characterised** by alternately passing the water several times past the IFR radiation lamps (8) and the UV radiation lamps (9) emitting light at a wave length exceeding 300 nm.

3. A process as claimed in claim 1 or 2, **characterised** by continuously irradiating the water by UV radiation lamps (10) emitting light at a wave length in the range of 100-200 nm.

4. A process as claimed in claim 1, 2 or 3, **characterised** by not irradiating the water by UV radiation lamps (11) emitting light at a wave length of 253.7 nm until it has passed all the other radiation lamps.

5. A process as claimed in claim 1, 2, 3 or 4, **characterised** in that the UV radiation lamps (10) emitting light at a wave length in the range of 100-200 nm preferably emit light at a wave length in the range of 110-120 nm.

6. An apparatus for cleaning chlorinated water and comprising a first vessel (1), in which the water passes from an inlet (3) to an outlet (4), both the inlet and the outlet being connected to the pool, and whereby the vessel (1) is provided with at least one UV radiation lamp (9) emitting light at a wave length exceeding 300 nm, and the vessel (1) further comprises at least one IFR radiation lamp (8) emitting light at a wave length in the range of 765 nm to 10 μm, the IFR radiation lamp being situated in front of the UV radiation lamp (10) in the flow direction, whereby UV radiation lamps (11) emitting light at a wave length of 253.7 nm are provided in connection with the vessel (1) and preferably in a separate second vessel (2) situated after the first vessel (1) in the flow direction, characterized in that the vessel (1) further comprises at least one UV radiation lamp (10) emitting light at a wave length in the range of 100-200 nm.

7. An apparatus as claimed in claim 6, **characterised** by the first vessel (1) including several IFR radiation lamps (8) and UV radiation lamps (9) emitting light at a wave length exceeding 300 nm, said IFR radiation lamps and said UV radiation lamps being situated in alternate succession in the flow direction.

8. An apparatus as claimed in claim 7, **characterised** in that the IFR radiation lamps (8) and the UV radiation lamps (9) emitting light at a wave length exceeding 300 nm extend transverse to the flow direction of the water through the vessel (1), whereas the UV radiation lamps (10) emitting light at a wave length in the range of 100-200 nm extend along the flow direction of the water inside the same area as the first-mentioned radiation lamps.

## Patentansprüche

1. Verfahren zur Reinigung von chloriertem Wasser, vorzugsweise in einem Schwimmbecken, durch Kreislaufführung des Wassers durch einen Behälter (1, 2), während das Wasser durch eine Anzahl von UV-Bestrahlungslampen (9) bestrahlt wird, die Licht einer Wellenlänge oberhalb 100 nm emittieren, wobei das Wasser mit IFR-Bestrahlungslampen (8) bestrahlt wird, ehe es die UV-Bestrahlungslampen (9) passiert, wobei die IFR-Bestrahlungslampen (8) Licht einer Wellenlänge im Bereich von 765 nm bis 10 μm emittieren, und das Wasser des weiteren mit UV-Bestrahlungslampen (11) bestrahlt wird, die Licht einer Wellenlänge von 253,7 nm emittieren, dadurch gekennzeichnet, daß das Wasser des weiteren mit UV-Bestrahlungslampen (10) bestrahlt wird, die Licht einer Wellenlänge im Bereich von 100 bis 200 nm emittieren.

2. Verfahren nach Anspruch 1, dadurch gekennzeichnet, daß das Wasser mehrere Male abwechselnd vorbeigeführt wird an den IFR-Bestrahlungslampen (8) und den UV-Bestrahlungslampen (9), die Licht einer Wellenlänge oberhalb 100 nm emittieren.

3. Verfahren nach Anspruch 1 oder 2, dadurch gekennzeichnet, daß das Wasser kontinuierlich mit UV-Bestrahlungslampen (10) bestrahlt wird, die Licht einer Wellenlänge im Bereich von 100 bis 200 nm emittieren.

4. Verfahren nach Anspruch 1, 2 oder 3, dadurch gekennzeichnet, daß das Wasser nicht eher mit den Licht einer Wellenlänge von 253,7 nm emittierenden UV-Bestrahlungslampen (11) bestrahlt wird, bis es alle übrigen Bestrahlungslampen passiert hat.

5. Verfahren nach Anspruch 1, 2, 3 oder 4, dadurch gekennzeichnet, daß die UV-Bestrahlungslampen (10), die Licht einer Wellenlänge im Bereich von 100 bis 200 nm emittieren, vorzugsweise Licht einer Wellenlänge im Bereich von 110 bis 120 nm emittieren.

6. Gerät zur Reinigung von chloriertem Wasser, umfassend einen ersten Behälter (1), in dem das Wasser von einem Zufluß (3) zu einem Abfluß (4) fließt, wobei sowohl Zufluß als auch Abfluß mit dem Becken verbunden sind, und wobei der Behälter (1) mit wenigstens einer UV-Bestrahlungslampe (9) versehen ist, die Licht einer Wellenlänge oberhalb 100 nm emittiert, und der Behälter (1) ferner wenigstens eine IFR-Bestrahlungslampe (8) umfaßt, die Licht einer Wellenlänge im Bereich von 765 nm bis 10 µm emittiert, wobei sich die IFR-Bestrahlungslampe in Fließrichtung vor der UV-Bestrahlungslampe (10) befindet, wobei dafür gesorgt ist, daß die UV-Bestrahlungslampen (11), die Licht einer Wellenlänge von 253,7 nm emittieren, mit dem Behälter (1) verbunden sind und vorzugsweise mit einem separaten zweiten Behälter (2), der sich in Fließrichtung nach dem ersten Behälter (1) befindet, dadurch gekennzeichnet, daß der Behälter (1) des weiteren wenigstens eine UV-Bestrahlungslampe (10) umfaßt, die Licht einer Wellenlänge im Bereich von 100 bis 200 nm emittiert.

7. Gerät nach Anspruch 6, dadurch gekennzeichnet, daß der erste Behälter (1) mehrere IFR-Bestrahlungslampen (8) und UV-Bestrahlungslampen (9) umfaßt, die Licht einer Wellenlänge oberhalb 100 nm emittieren, wobei die IFR-Bestrahlungslampen und die UV-Bestrahlungslampen in abwechselnder Reihenfolge in Fließrichtung angeordnet sind.

8. Gerät nach Anspruch 7, dadurch gekennzeichnet, daß die IFR-Bestrahlungslampen (8) und die UV-Bestrahlungslampen (9), die Licht einer Wellenlänge oberhalb 100 nm emittieren, sich quer zur Fließrichtung des Wassers durch den Behälter (1) erstrecken, während die UV-Bestrahlungslampen (10), die Licht einer Wellenlänge im Bereich von 100 bis 200 nm emittieren, sich längs zur Fließrichtung des Wassers innerhalb des gleichen Bereichs wie die erstgenannten Bestrahlungslampen erstrecken.

**Revendications**

1. Un procédé d'épuration d'eau chlorée, de préférence dans une piscine, par circulation de l'eau à travers un récipient (1, 2) pendant que l'eau est soumise à un rayonnement de plusieurs lampes à rayons ultra-violets ou UV (9) émettant une lumière d'une longueur d'onde dépassant 300 nm, l'eau étant soumise à un rayonnement par lampes à rayons infra-rouges ou IR (8) avant d'être soumise aux lampes à rayons UV (9), lesdites lampes à rayons IR (8) émettant une lumière d'une longueur d'onde comprise dans la plage de 765 nm à 10 µm, et l'eau étant en outre soumise à un rayonnement de lampes UV (11) émettant une lumière d'une longueur d'onde de 253,7 nm, caractérisé en ce que l'eau est en outre irradiée par des lampes à rayons UV (10) émettant une lumière d'une longueur d'onde comprise dans la plage de 100 à 200 nm.

2. Un procédé selon la revendication 1, caractérisé par un passage en alternance de l'eau plusieurs fois devant les lampes à rayons IR (8) et les lampes à rayons UV (9) émettant une lumière d'une longueur d'onde dépassant 300 nm.

3. Un procédé selon la revendication 1 ou 2, caractérisé en ce que l'eau est soumise en continu à un rayonnement de lampes à rayons UV (11) émettant une lumière d'une longueur d'onde comprise dans la plage de 100 à 200 nm.

4. Un procédé selon la revendication 1, 2 ou 3, caractérisé en ce que l'eau n'est pas soumise à un rayonnement des lampes à rayons UV (10) émettant une lumière d'une longueur d'onde de 253,7 nm avant d'avoir passé devant toutes les autres lampes rayonnantes.

5. Un procédé selon l'une quelconque des revendications 1, 2, 3 ou 4, caractérisé en ce que les lampes à rayon UV (10) émettant une lumière d'une longueur d'onde comprise dans la plage de 100 à 200 nm émettent de préférence une lumière d'une longueur d'onde comprise dans la plage de 110 à 120 nm.

6. Un appareil d'épuration d'eau chlorée et comprenant un premier récipient (1) dans lequel l'eau passe depuis une entrée (3) vers une sortie (4), l'entrée et la sortie étant toutes deux reliées à la piscine, et dans lequel le récipient (1) comporte au moins une lampe à rayons UV (9) émettant une lumière d'une longueur d'onde dépassant 300 nm et le récipient (1) comprend en outre au moins une lampe à rayons IR (8) émettant une lumière d'une longueur d'onde comprise dans la plage de 765 nm à 10 µm, la lampe à rayons IR étant située à l'avant de la lampe à rayons UV (10) dans la direction d'écoulement, et dans lequel des lampes à rayons UV (11) émettant une lumière d'une longueur d'onde de 253,7 nm sont prévues en liaison avec le récipient (1) et de préférence dans un deuxième récipient séparé (2) situé après le premier récipient (1) dans la direction d'écoulement, caractérisé en ce que le récipient (1) comprend en outre au moins une lampe à rayons UV (10) émettant une lumière d'une longueur d'onde comprise dans la plaque de 100 à 200 nm.

7. Un appareil selon la revendication 6, caractérisé en ce que le premier récipient (1) comprend plusieurs lampes à rayons IR (8) et lampes à rayons UV (9) émettant une lumière d'une longueur d'onde dépassant 300 nm, lesdites lampes à rayons IR et lesdites lampes à rayons UV étant situées successivement en alternance dans la direction d'écoulement.

8. Un appareil selon la revendication 7, caractérisé en ce que les lampes à rayons IR (8) et les lampes à rayons UV (9) émettant une lumière d'une longueur d'onde dépassant 300 nm s'étendent transversalement à la direction d'écoulement de l'eau à travers le récipient (1), alors que les lampes à rayons UV (10) émettant une lumière d'une longueur d'onde comprise dans la plage de 100 à 200 nm s'étendent le long de la direction d'écoulement de l'eau à l'intérieur de la même zone que les jambes rayonnantes mentionnées en premier.

Fig.1

Fig. 2

Killing effect on E. coli

*Fig. 3*

Fig. 4